(19) Europäisches Patentamt
European Patent Office
Office européen des brevets

(11) EP 2 176 305 B1

(12) **EUROPEAN PATENT SPECIFICATION**

(45) Date of publication and mention of the grant of the patent:
**04.09.2019 Bulletin 2019/36**

(21) Application number: **08773951.2**

(22) Date of filing: **08.07.2008**

(51) Int Cl.:
*C08F 8/46* (2006.01) *C08F 8/32* (2006.01)
*C08F 10/08* (2006.01) *C10L 1/2383* (2006.01)

(86) International application number:
**PCT/EP2008/005628**

(87) International publication number:
**WO 2009/010225 (22.01.2009 Gazette 2009/04)**

(54) **PROCESS TO PREPARE POLYALKENYL SUCCINIMIDES AND USE THEREOF AS DETERGENTS FOR FUELS**

VERFAHREN ZUR HERSTELLUNG VON POLYALKYLENSUCCINIMIDE UND IHRE VERWENDUNG ALS DETERGENTIEN FÜR BRENNSTOFFE

PROCÉDÉ DE PRÉPARATION DE SUCCINIMIDES DE POLYALCÉNYLE ET LEUR UTILISATION COMME DÉTERGENTS POUR COMBUSTIBLES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.07.2007 IT MI20071446**

(43) Date of publication of application:
**21.04.2010 Bulletin 2010/16**

(73) Proprietor: **ENI S.p.A.**
**00144 Rome (IT)**

(72) Inventors:
- **RAUSA, Riccardo**
**I-20097 San Donato Milanese (Milan) (IT)**
- **PEDICILLO, Arcangelo**
**I-20127 Milan (IT)**

(74) Representative: **Bottero, Carlo et al**
**Barzanò & Zanardo Milano S.p.A.**
**Via Borgonuovo, 10**
**20121 Milano (IT)**

(56) References cited:
**EP-A- 0 355 895** **EP-A- 0 457 599**
**EP-A- 0 587 381** **EP-A- 0 602 863**
**EP-A- 0 629 688** **EP-A- 1 882 702**
**WO-A-97/47666**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 176 305 B1

## Description

The present invention relates to a process for the preparation of polybutenyl succinimides and the use thereof as detergents for fuels.

More specifically, the present invention relates to a process for the preparation of low-molecular-weight polybutenyl succinimides and the use thereof as detergents in light distillate or middle distillate fuels such as diesel fuel, household heating oil, kerosene, jet fuel, fuels for gas turbines, etc.

Even more specifically, the present invention relates to a process for the preparation of low-molecular-weight polyisobutenyl succinimides and the use thereof as detergents for fuels.

In the present description, all the conditions indicated in the text should be considered preferred conditions even if not expressly declared.

The use of small quantities of various additives for improving the properties and/or performances of gasoline fuels and middle distillates, is known. Small quantities of dispersing agents are used, for example, for improving engines cleaning and consequently obtaining with time a reduction in the emission of harmful substances which are formed during fuel combustion.

In internal combustion engines the formation of residues leads to the accumulation of deposits mainly in the injectors with a consequent imperfect fuel combustion, with all the consequences deriving therefrom (increased emissions, higher fuel consumption, etc.). At the same time, other additives are used in these fuels, for example: antioxidants, corrosion inhibitors, antifoam agents, etc.

Among the known detergent additives, polyalkenyl acylating agents possibly containing an imide group are utilized. These compounds are generally prepared either by classical synthesis, using chlorinated intermediates, or by direct thermal reaction of a "reactive" polyalkene, characterized by double terminal bonds of the vinylidene type, with an enophile, at a temperature higher than 150°C, generally higher than 200°C, possibly followed by the reaction with an amine having at least one primary aminic group which can react to form the imide group. Examples of processes for the preparation of these polyalkenyl acylating agents are provided in US patents 3,172,892, 3,912,764, 4,086,251 and 4,152,499.

Furthermore, WO9747666 describes a process for making a substituted carboxylated derivative by reacting a polyolefin in which at least 35% of the unsaturated linkages are vinyl and/or vinylidene groups with a molar excess of an unsaturated carboxylic compound at an elevated temperature. The process comprises of (a) reacting in an initial mild stage the polyolefin with the carboxylic compound in the absence of any other acidic or catalytic additive at a temperature in the range from 140-202°C until at least 30% of the vinyl and/or vinylidene groups in the polyolefin have reacted with the carboxylic compound, and (b) continuing the reaction in a subsequent severe stage in which the temperature is allowed to rise at least 10°C above the maximum temperature of stage (a) so that the temperature does not rise above 250°C in this severe stage.

EP0602863 describes pure hydrocarbyl succinylating agents, substantially pure derivatives thereof, to a method of preparation of pure substituted succinylating agents and their derivatives, and to the use of thereof as additives for fuels and lubricants. These are produced by reacting an olefin polymer such as poly(iso)butylene with maleic anhydride to form a hydrocarbyl substitued succinylating agent which is then cleaned by solvent extraction to remove any impurities therein before use in further reactions.

EP0587381 describes a substituted acylating agent derivable by reacting a polymer comprising poly(iso)butene with an enophile wherein at least 50% of the unsaturated linkages in the poly(iso)butene reactant terminate in a =CH2 group forming the highly reactive component (HRPIB) thereof. The number average molecular weight (Mn) of the HRPIB is at least 750 and the substitution ratio of the substituted acylating agent, which is chlorine free, is <1.3.

EP0457599 describes polybutenyl substituted succinic acylating agents formed by reacting (a) an acidic reactant represented by the general formula

**R-CO-CH=CH-CO-R'**

wherein R and R' are independently -OH, -O-lower alkyl, a halogen atom, or taken together are a single oxygen atom, with (b) a polymer composed mainly or entirely of polyisobutene, at least 50% of the polyisobutene content of the polymer having an end group represented by the formula

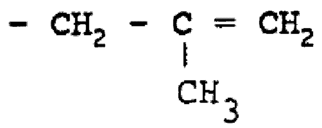

The mole ratio of acidic reactant:polymer is at least 1:1; and the reaction mixture is maintained under superatmospheric

pressure during at least a substantial portion of the reaction period.

EP0355895 describes a process for the preparation of polyolefin-substituted succinic anhydrides essentially free from chlorine and in which the average molar ratio of succinic groups to polyolefin chains is greater than 1.3:1, which comprises heating a polyolefin with a molar excess of maleic anhydride, the polyolefin containing at least 70% of the terminal groupings in a structure having an alpha olefinic bond and/or structures in equilibrium with such alpha olefinic structures.

EP0629688 describes oil-soluble additives with dispersant properties inert towards fluoroelastomers are described, prepared by reacting an alkyl or alkenyl disuccinimide with an anhydride of an unsaturated bicarboxylic aliphatic acid or the corresponding acid. The reaction is conducted at a temperature of between 130 and 170°C. The molar ratio of anhydride to disuccinimide is between 1.05 and 1.95.

In the case of products obtained via a thermal process, however, if a chlorine-free product is desired, the preparation processes of the known art are characterized, when carried out at relatively low temperatures (around 200°C), by the drawback of having long reaction times and rather low yields and, in any case, they provide a product with a low functionalization degree.

The Applicant has now found a detergent additive for fuels such as "light distillates" and "middle distillates", selected from the group of polyalkenyl succinimides, having a high functionalization degree which makes it particularly effective for this function, as illustrated in the enclosed examples.

An object of the present invention therefore relates to a process for the preparation of polybutenyl succinimides produced starting from polybutenyl succinanhydrides having a number average molecular weight, Mn, ranging from about 510 to 1,500 and a functionalization degree (FD) higher than 1, generally ranging from 1.50 to 2.50. The functionalization degree is calculated according to the procedure described in US patent 4,952,328.

Alternatively, the functionalization degree of the polybutenyl succinanhydrides can be calculated more directly and specifically, via $H^1$-NMR($FD_{\mathbf{NMR}}$), by determining, in the reaction mixture, the formation of the various anhydride adducts, using the following formula:

$$FD_{NMR} : (A/2 + B + 2C + 2D)/(A/2 + B + C + D)$$

wherein A and B are the areas of mono-functionalized anhydrides and C and D are those of bis-functionalized anhydrides, calculated from the resonances attributed in the NMR spectra, according to what reported in the literature (Tessier M., Marechal E.; J. Polym. Sci., Part A: Polym. Chem. 1998; 26: 785-810). In this case the $FD_{NMR}$ of the products can vary from 1 to 2, preferably from 1.2 to 1.9.

More specifically, an object of the present invention relates to a process for the preparation of polybutenyl succinimides comprising:

a. reacting a reactive polyisobutene (PIB) or polybutene-1 having a content of terminal vinylidene groups of at least 45% and a number average molecular weight ranging from 800 to 1,000 , with an enophile selected from maleic anhydride or maleic acid, at a temperature of from 180 to 300°C at room pressure or under nitrogen at pressure ranging from 0.1 to 1 MPa;

b. carrying out the reaction thermally for a time sufficient for having a conversion of the terminal vinylidene groups higher than 10%;

c. completing the reaction in the presence of a reaction accelerator consisting of $SnCl_2 \cdot 2H_2O$;

d. reacting, at a temperature ranging from 100 to 200°C, the reaction product of step (c), the polybutenyl succinanhydride, with a polyamine selected from those having the general formula

$$H_2N(CH_2CH_2NH)_nH$$

wherein n is an integer ranging from 1 to 10.

According to the present invention, the reagent mixture of the first reaction phase (a)-(b) is introduced into a reactor, suitable for performing batch reactions, in any convenient way before heating to the reaction temperature. The reagents, for example, can be charged contemporaneously or sequentially in any order or pre-mixed in a mixing container and then transferred to the reaction vessel. Alternatively, the reaction of phase (a)-(b) can be carried out in continuous.

The reaction is then completed (phase c) in the presence of a reaction accelerator consisting of $SnCl_2 \cdot 2H_2O$.

The reaction accelerator is added to the reaction mixture when the conversion of the terminal vinylidene groups of the reactive polybutenyl ranges from 20 to 90%, preferably from 30 to 80%. The accelerator is added to the reaction mixture in quantities corresponding to a molar percentage concentration, referred to the reactive double bonds of the polybutenyl, ranging from 0.2 to 1.5%, preferably from 0.5 to 1.1%.

The reaction of phases (a)-(b) and (c) can be carried out without a solvent and the reaction products can be recovered after bringing the reaction mixture to room temperature. The products recovered are subsequently used for the reaction of step (d). Alternatively, the reaction of step (d) can be effected in the same reaction environment as phases (a)-(c).

The reactive polyalkenes differ from the conventional polyalkenes in the content of terminal vinylidene groups. A polyalkylene chain which has a terminal vinylidene group can be represented by the formula:

$$POLY\text{-}C(R) = CH_2$$

wherein R is an alkyl group, whose identity depends on the monomeric unit from which the polyalkene is obtained (for example R is a methyl group for polyisobutene) whereas POLY represents the remaining part of the polyalkenyl chain. Reactive polyalkenes are those which have a content of terminal vinylidene groups equal to at least 35%, preferably at least 40%, more preferably ranging from 50 to 95%.

The polyalkenes are generally reactive homopolymers of $\alpha$-olefins, or co-polymers of $\alpha$-olefins, such as, for example, the ethylene-$\alpha$-olefins copolymer. For example, $\alpha$-olefins are those, linear or branched, having the general formula $CH_2$=CHR' wherein R' represents a linear or branched alkyl radical, containing from 1 to 10 carbon atoms.

Polyalkenes according to the present invention are reactive polyisobutene (PIB) and polybutene-1 with a content of terminal vinylidene groups of at least 45%, for example between 55 and 99%, preferably from 55 to 90%. Methods for the preparation of reactive polyisobutene or polybutene-1 are described, for example, in US patents 4,152,499, 4,605,808, 5,674,955 and in the international patent application WO 01/19873.

Furthermore, the polyisobutene (PIB) or polybutene-1 according to the present invention have a number average molecular weight, Mn, measured, for example, by means of GPC (Gel Permeation Chromatography), osmometry, proton NMR or carbon-13 NMR, ranging from 800 to 1,000.

The formation of the intermediate polybutenyl succinanhydride is obtained through the reaction between the reactive polyisobutene (PIB) or polybutene-1 and an "enophile" selected from maleic anhydride or the corresponding acid.

The reaction between the reactive polyisobutene (PIB) or polybutene-1 and the enophile takes place at a temperature ranging from 180 to 300°C, preferably from 190 to 250°C and even more preferably at about 200°C, at room pressure or under nitrogen, at pressures ranging from 0.1 to 1 MPa.

The reactive polyisobutene (PIB)/enophile or polybutene-1/enophile molar ratios generally range from 1:0.9 and 1:3, preferably from 1:1.3 to 1:2.5, for example from 1:1.5 to 1:2.4.

The polybutenyl succinanhydride is reacted with a polyamine selected from those having the general formula

$$H_2N(CH_2CH_2NH)_nH$$

wherein n is an integer ranging from 1 to 10. Examples of these polyamines are ethylene diamine, diethylene triamine (DETA), triethylene tetramine (TETA), tetraethylene pentamine (TEPA), etc.

The reaction between the polybutenyl succinanhydride and the polyamine, for the formation of polyisobutenyl succinimides (PIBSI), takes place at a temperature ranging from 100 to 200°C, preferably from 140 to 170°C, at atmospheric pressure, even if it is possible to operate at pressures higher or lower than atmospheric pressure.

The water present in the system or generated during the reaction is preferably removed from the system by stripping under nitrogen. The removal can be facilitated by operating under conditions of reduced pressure.

The relative quantities of anhydride and polyamines are selected so that the ratio between the equivalents of succinic anhydride and polyamine generally ranges from 0.5 to 2. In this way, by regulating the stoichiometry of the reaction, mono- or disuccinimides can be obtained.

The term imide, as used in the present description and claims, refers to the complete reaction product between the polyamine and the acylating agent (for example polyisobutenyl succinanhydride or PIBSA) which can comprise amides, amidines and possible saline species which can be formed from the reaction between the anhydride group and polyamine.

The imidation reaction can take place in the same reaction environment as the anhydride, or the polybutenyl succinanhydride can be recovered with the known methods, for example by gear pumps, and can be transferred and reacted separately with the amine. The reaction can be carried out in the presence or absence of a solvent (mass imidation) and in the latter case the solvent can be added at the end. In this way, the final succinimide can be filtered, if necessary, moved, stored or more advantageously mixed with other components.

Suitable solvents for the purpose are aromatic solvents, for example, toluene or xylenes and light alkylate, Aromatic 100, Aromatic 150, Solvesso 150, Solvesso 200 and in general highly aromatic naphthas.

The polybutenyl succinimides, obtained with the process of the present invention, can be used as detergent additives for gasoline or diesel fuel or they can be used together with other components in "additive concentrates" or "packages" to be added to the fuel whose performances are to be improved. The final detergent is a highly desirable

alternative with respect to analogous detergents produced according to the classical synthesis process of anhydrides by means of chlorinated intermediates.

Furthermore, the polybutenyl succinimides, obtained with the process of the present invention, generally have a higher functionalization degree than that obtained with the "classical" thermal reaction, which makes them more reactive with respect to the detergents obtained with non-catalytic thermal processes.

A further object of the present invention relates to fuel compositions comprising polybutenyl succinimides prepared as described above.

In particular, a further object of the present invention relates to fuel compositions comprising:

i. a base fuel falling within the definition of light distillates with a boiling point ranging from 60 to 180°C; and
ii. a base fuel falling within the definition of middle distillates with a boiling point ranging from 180 to 400°C; and
iii. from 0.0001 to 0.15% by weight with respect to the total weight of the composition, preferably from 0.01 to 0.15%, of a polybutenyl succinimide, deriving from a polybutenyl succinanhydride having a number average molecular weight Mn ranging from about 510 to 1,500 and a functionalization degree (FD) higher than 1.0 or $FD_{NMR}$ ranging from 1 to 2, obtained with the process comprising steps (a)-(d) described above.

Particularly preferred in the fuel compositions of the present invention are polyisobutenyl succinimides, deriving from polyisobutenyl succinanhydrides having a number average molecular weight Mn ranging from 800 to 1,300 and a functionalization degree (FD) higher than 1.0 or $FD_{NMR}$ ranging from 1 to 2, obtained with the process comprising steps (a)-(d) described above.

Fuels for motor vehicles of the "gasoline" or "diesel fuel" type essentially consisting of blends of linear or branched paraffin, cycloparaffin, olefin, aromatic hydrocarbons and mixtures thereof, with a boiling point in the first case ranging from 60 to 180°C and in the latter case from 180 to 400°C, fall within the definition of base fuel.

The present invention is now illustrated for illustrative and non-limiting purposes by means of the following examples.

EXAMPLE 1

Synthesis of polyisobutenyl succinanhydride (PIBSA)

In a generic experiment, 100 g of PIB (Glissopal 1,000, BASF; Mn 1,000) are introduced into a 250 mL cylindrical glass reactor, equipped with a mechanical stirrer and a reflux condenser.

The reactor is flushed with nitrogen, under stirring, until a temperature of 110°C is reached. After 30 minutes, 14.7 g of maleic anhydride (MA) are added, under nitrogen, and the mixture is heated to 200°C.

After at least 50% of the reaction has been completed, $SnCl_2 \cdot 2H_2O$ is added, under stirring, and the reaction is kept under stirring for twenty-one hours. The temperature is then lowered to 160°C and the unreacted enophile is stripped under vacuum (0.2 mm Hg).

The weight conversion degree of the reaction was evaluated, by difference, by quantifying the weight of non-reacted polyisobutylene after its separation from the reaction mixture. A weighed quantity of polyisobutenyl succinanhydride (PIBSA), dissolved in n-heptane, is eluted through a chromatographic column, containing silica gel. The eluted phase, containing only unreacted PIB, is then evaporated, dried under vacuum (0.2 mm Hg) and weighed.

The functionalization degree (FD), expressed as grafted moles of succinic anhydride per mole of reacted polymer, was determined according to the procedure described in US patent 4,952,328, after determining the acidity of the PIBSA, by titration according to what is described in the method ASTM D 664

The NMR functionalization degree ($FD_{NMR}$) was calculated after determining the adducts present in the PIBSA according to the method described in literature: Tessier M., Marechal E. J. Polym. Sci., Part A: Polym. Chem. 1988; 26; 785-810.

Tables 1-3 show the yields and the FD of the products obtained at various times, in the presence and absence of catalyst.

Table 1

| PIB Mn | T (°C) | Cat. (mole%) | PIB/MAH | Reaction time (hours) | Yield (w%) |
|---|---|---|---|---|---|
| 1000 | 200 | 0.00 | 1/1.5 | 21 | 80.0 |
| 1000 | 200 | 0.5 (1) | 1/1.5 | 21 | 66.5 |

(continued)

| PIB Mn | T (°C) | Cat. (mole%) | PIB/MAH | Reaction time (hours) | Yield (w%) |
|---|---|---|---|---|---|
| 1000 | 200 | 0.5 (2) | 1/1.5 | 21 | 82.0 |
| (1) Catalyst added at the beginning of the reaction<br>(2) Catalyst added after partial conversion of the PIB | | | | | |

Table 2

| PIB Mn | T (°C) | Catalyst (mole %) | PIB/MAH | Reaction time (hours) | Yield (w%) | $FD_{NMR}$ |
|---|---|---|---|---|---|---|
| 1000 | 200 | 0.0 | 1/1.5 | 9 | 69.8 | 1.19 |
| | | | | 16 | 76.1 | 1.24 |
| 1000 | 200 | 0.5 (1) | 1/1.5 | 9 | 73.0 | 1.31 |
| | | | | 16 | 78.1 | 1.48 |
| (1) Catalyst added after partial conversion of the PIB | | | | | | |

Table 3

| PIB Mn | T (°C) | Catalyst (mole %) | PIB/MAH | Reaction time (hours) | FD | $FD_{NMR}$ |
|---|---|---|---|---|---|---|
| 1000 | 200 | 0.0 | 1/1.5 | 21 | 1.80 | 1.26 |
| 1000 | 200 | 0.5 (1) | 1/1.5 | 21 | 2.12 | 1.48 |
| (1) Catalyst added after partial conversion of the PIB | | | | | | |

**Synthesis of polyisobutenyl succinimide (A)**

The polyisobutenyl succinimide (PIBSI) is prepared by introducing 100 g of polyisobutenyl succinanhydride (PIBSA) into a jacketed cylindrical glass reactor, equipped with a mechanical stirrer, a lower drainage valve and a reflux condenser. 9.32 g of triethylene tetra-amine (TETA) are then added at a temperature of 130°C, under a nitrogen blanket, the temperature is brought to 165°C and the reaction is continued for about two hours. The water formed is stripped away by applying, for an hour, a nitrogen flow from the bottom of the reactor.

**Synthesis of polyisobutenyl succinimide (B)**

The same procedure is followed as in the previous case (A) except for using 18.64 g of polyamine TETA per 100 g of PIBSA.

EXAMPLE 2

**Evaluation of the products: Results obtained with the Peugeot XUD9 "Nozzle fouling" test (CEC F-23-a-01)**

The Peugeot XUD9 "Nozzle Fouling" test (CEC F-23-a-01) was used for evaluating the "keep clean" properties (cleaning of the injectors of an internal combustion engine) of the detergents object of the present invention. Each test was carried out by introducing the polyisobutenyl succinimides, prepared according to what is described in examples 1A and 1B, in a suitable "package" containing other additives appropriately mixed with diesel fuel having a very low sulfur content (<10 ppm). The results are compared with those obtained with a diesel fuel not containing additives.

Table 4 also shows the results obtained with the same diesel fuel containing a commercial detergent used in the same concentration.

The fouling percentage of the injector indicates the efficacy of the detergent. The lower the percentage, the better the capacity of the detergent to prevent the formation of deposits on the surface of injectors or to clean the latter from residues.

Table 4

| Diesel fuel | Additive | Average fouling of the injector at 0.1 mm needle lift |
|---|---|---|
| Base diesel fuel S < 10 ppm | None | 89% |
| Base diesel fuel S < 10 ppm | Commercial package 100 ppm | 82% |
| Base diesel fuel S < 10 ppm | Package with detergent of example 1A 100 ppm | 78% |
| Base diesel fuel S < 10 ppm | Package with detergent of example 1B 100 ppm | 78% |

The results of Table 4 show the existence of an effective detergent capacity of the polyalkenyl succinimides, object of the present invention with respect to the fuel not containing additives and a more effective action with respect to that of a commercial detergent. Table 5 shows the results obtained from XUD-9 engine tests obtained with diesel fuels, of very low sulfur content (<10 ppm), added with detergents prepared according to what described in the examples 1A and 1B, compared with both a reference base fuel and a diesel fuel containing a polyalkenyl succinimide produced via a classical thermal reaction (without a catalyst) .

Table 5

| Diesel fuel | Additive | Average fouling of the injector at 0.1 mm needle lift |
|---|---|---|
| Base diesel fuel S < 10 ppm | None | 89% |
| Base diesel fuel S < 10 ppm | Package with "ene" thermal reaction detergent 500 ppm | 82% |
| Base diesel fuel S < 10 ppm | Package with detergent of example 1A 500 ppm | 54% |
| Base diesel fuel S < 10 ppm | Package with detergent of example 1B 500 ppm | 55% |

Also in this case, the efficacy of the detergents, object of the present invention is evident, both with respect to the pure fuel and also to the analogous products obtained via "classical" thermal reactions, i.e. produced without a catalyst.

## Claims

**1.** Process for the preparation of polybutenyl succinimides, deriving from polybutenyl succinanhydrides with a functionalization degree higher than 1.0 or a $FD_{NMR}$ ranging from 1 to 2 comprising:

a. reacting a reactive polyisobutene (PIB) or polybutene-1 having a content of terminal vinylidene groups of at least 45% and a number average molecular weight ranging from 800 to 1,000, with an enophile selected from maleic anhydride or maleic acid, at a temperature of from 180 to 300°C at room pressure or under nitrogen at pressure ranging from 0.1 to 1 MPa;
b. carrying out the reaction thermally for a time sufficient for having a conversion of the terminal vinylidene groups higher than 10%;
c. completing the thermal reaction in the presence of a reaction accelerator consisting of $SnCl_2 \cdot 2H_2O$;
d. reacting, at a temperature ranging from 100 to 200°C,the reaction product of step (c), the polybutenyl succinanhydrides, with a polyamine selected from those having the general formula

$$H_2N(CH_2CH_2NH)_nH$$

wherein n is an integer ranging from 1 to 10.

2. The process according to any of the previous claims, wherein the reactive polyisobutene (PIB)/enophile or polybutene-1/enophile molar ratios range from 1:0.9 to 1:3.

3. The process according to any of the previous claims, wherein the reaction accelerator is added to the reaction mixture when the conversion of the terminal vinylidene groups of the reactive polyisobutene (PIB) or polybutene-1 ranges from 20 to 90%.

4. The process according to any of the previous claims, wherein the accelerator is added to the reaction mixture in quantities corresponding to a molar percentage concentration, referring to the reactive double bonds of the polyisobutene (PIB) or polybutene-1, ranging from 0.2 to 1.5%.

5. The process according to any of the previous claims, wherein the relative quantities of anhydride and polyamines are selected so that the ratio between the equivalents of succinic anhydride and those of the polyamine ranges from 0.5 to 2.

6. A fuel composition comprising:

i. a base fuel falling within the definition of light distillates with a boiling point ranging from 60 to 180°C; or
ii. a base fuel falling within the definition of middle distillates with a boiling point ranging from 140 to 400°C; and
iii. 0.0001-0.15% by weight with respect to the total weight of the composition of a polybutenyl succinimide obtained according to any of the previous claims.

7. The fuel composition according to claim 6, wherein the polybutenyl succinimide is obtained according to any of the previous claims 1-5 wherein the polyisobutenyl succinanhydrides has a number average molecular weight Mn ranging from about 800 to 1,300 and a functionalization degree (FD) higher than 1.00 or $FD_{NMR}$ ranging from 1 to 2.

## Patentansprüche

1. Verfahren zur Herstellung von Polybutenylsuccinimiden, abgeleitet von Polybutenylsuccinanhydriden mit einem Funktionalisierungsgrad größer als 1,0 oder einem $FD_{NMR}$-Wert in einem Bereich von 1 bis 2, umfassend:

a. Umsetzung eines reaktiven Polyisobutens (PIB) oder Polybutens-1 mit einem Gehalt an terminalen Vinylidengruppen von mindestens 45% und einem Zahlenmittel-Molekulargewicht in einem Bereich von 800 bis 1 000, mit einem Enophil, ausgewählt aus Maleinsäureanhydrid oder Maleinsäure, bei einer Temperatur von 180 bis 300 °C bei Raumdruck oder unter Stickstoff bei einem Druck in einem Bereich von 0,1 bis 1 MPa;
b. Ausführen der Umsetzung in thermischer Weise über einen Zeitraum ausreichend für eine Umwandlung der terminalen Vinylidengruppen größer als 10%;
c. Vervollständigung der thermischen Umsetzung in Gegenwart eines Reaktionsbeschleunigers, bestehend aus $SnCl_2 \cdot 2H_2O$;
d. Umsetzung bei einer Temperatur in einem Bereich von 100 bis 200 °C des Reaktionsproduktes aus Schritt (c), der Polybutenylsuccinanhydride, mit einem Polyamin, ausgewählt aus denjenigen mit der allgemeinen Formel

$$H_2N(CH_2CH_2NH)_nH,$$

worin n eine Ganzzahl in einem Bereich von 1 bis 10 ist.

2. Verfahren nach irgendeinem der vorhergehenden Ansprüche, wobei die Molverhältnisse reaktives Polyisobuten (PIB) / Enophil oder Polybuten-1 / Enophil in einem Bereich von 1:0,9 bis 1:3 sind.

3. Verfahren nach irgendeinem der vorhergehenden Ansprüche, worin der Reaktionsbeschleuniger der Reaktionsmischung zugegeben wird, wenn die Umwandlung der terminalen Vinylidengruppen des reaktiven Polyisobutens (PIB) oder des Polybutens-1 in einem Bereich von 20 bis 90% ist.

4. Verfahren nach irgendeinem der vorhergehenden Ansprüche, worin der Beschleuniger der Reaktionsmischung in

Mengen zugegeben wird, die einer molaren prozentualen Konzentration entspricht, bezogen auf die reaktiven Doppelbindungen des Polyisobutens (PIB) oder des Polybutens-1, in einem Bereich von 0,2 bis 1,5%.

**5.** Verfahren nach irgendeinem der vorhergehenden Ansprüche, worin die relativen Mengen von Anhydrid und Polyaminen so ausgewählt werden, dass das Verhältnis zwischen den Äquivalenten des Succinsäureanhydrids und denjenigen des Polyamins in einem Bereich von 0,5 bis 2 ist.

**6.** Brennstoffzusammensetzung, umfassend:

i. einen Basisbrennstoff, der in die Definition für leichte Destillate mit einem Siedepunkt in einem Bereich von 60 bis 180 °C fällt; oder
ii. einen Basisbrennstoff, der in die Definition für Mitteldestillate mit einem Siedepunkt in einem Bereich von 140 bis 4000 °C fällt; und
iii. 0,0001-0,15 Gew.-%, bezogen auf das Gesamtgewicht der Zusammensetzung eines Polybutenylsuccinimids, erhalten gemäß irgendeinem der vorhergehenden Ansprüche.

**7.** Brennstoffzusammensetzung gemäß Anspruch 6, worin das Polybutenylsuccinimid erhalten wird nach irgendeinem der Ansprüche 1-5, wobei die Polyisobutenylsuccinanhydride ein Zahlenmittel-Molekulargewicht Mn in einem Bereich von etwa 800 bis 1 300 haben und einen Funktionalisierungsgrad (FD) größer als 1,00 oder einen $FD_{NMR}$-Wert in einem Bereich von 1 bis 2.

**Revendications**

**1.** Procédé pour la préparation de polybuténylsuccinimides, dérivant d'anhydrides polybuténylsucciniques ayant un degré de fonctionnalisation supérieur à 1,0 ou un $DF_{RMN}$ se situant dans la plage de 1 à 2, comprenant les étapes consistant à :

a. faire réagir un polyisobutène (PIB) ou polybutène-1 réactif ayant une teneur en groupes vinylidène en bout de chaîne d'au moins 45 % et une masse moléculaire moyenne en nombre se situant dans la plage de 800 à 1 000, avec un composé énophile choisi parmi l'anhydride maléique et l'acide maléique, à une température de 180 à 300 °C, sous la pression ambiante ou sous azote sous une pression se situant dans la plage de 0,1 à 1 MPa ;
b. conduire la réaction thermiquement pendant une durée suffisante pour obtenir une conversion de plus de 10 % des groupes vinylidène en bout de chaîne ;
c. achever la réaction thermique en la présence d'un accélérateur de réaction consistant en $SnCl_2 \cdot 2H_2O$ ;
d. faire réagir, à une température se situant dans la plage de 100 à 200 °C, le produit de réaction de l'étape (c), les anhydrides polybuténylsucciniques, avec une polyamine choisie parmi celles correspondant à la formule générale

$$H_2N(CH_2CH_2NH)_nH$$

dans laquelle n est un nombre entier se situant dans la plage de 1 à 10.

**2.** Procédé selon l'une quelconque des revendications précédentes, dans lequel les rapports molaires polyisobutène (PIB)/composé énophile ou polybutène-1/composé énophile réactifs se situent dans la plage de 1:0,9 à 1:3.

**3.** Procédé selon l'une quelconque des revendications précédentes, dans lequel on ajoute l'accélérateur de réaction au mélange réactionnel lorsque la conversion des groupes vinylidène en bout de chaîne du polyisobutène (PIB) ou polybutène-1 réactif se situe dans la plage de 20 à 90 %.

**4.** Procédé selon l'une quelconque des revendications précédentes, dans lequel on ajoute l'accélérateur au mélange réactionnel en des quantités correspondant à une concentration en pourcentage molaire, se rapportant aux doubles liaisons réactives du polyisobutène (PIB) ou polybutène-1, se situant dans la plage de 0,2 à 1,5 %/.

**5.** Procédé selon l'une quelconque des revendications précédentes, dans lequel on choisit les quantités relatives d'anhydride et de polyamines de manière que le rapport entre les équivalents d'anhydride succinique et ceux de la polyamine se situe dans la plage de 0,5 à 2.

**6.** Composition de carburant comprenant :

i. un carburant de base rentrant dans la définition de distillats légers ayant un point d'ébullition se situant dans la plage de 60 à 180 °C ; ou
ii. un carburant de base rentrant dans la définition de distillats moyens ayant un point d'ébullition se situant dans la plage de 140 à 400 °C ; et
iii. 0,001-0,15 % en poids, par rapport au poids total de la composition, d'un polybuténylsuccinimide obtenu selon l'une quelconque des revendications précédentes.

**7.** Composition de carburant selon la revendication 6, dans laquelle le polybuténylsuccinimide est obtenu selon l'une quelconque des revendications 1 à 5 précédentes, dans laquelle l'anhydride polyisobuténylsuccinique a une masse moléculaire moyenne en nombre Mn se situant dans la plage d'environ 800 à 1 300 et un degré de fonctionnalisation (DF) de plus de 1,00 ou un $DF_{RMN}$ se situant dans la plage de 1 à 2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3172892 A
- US 3912764 A
- US 4086251 A
- US 4152499 A
- WO 9747666 A
- EP 0602863 A
- EP 0587381 A
- EP 0457599 A
- EP 0355895 A
- EP 0629688 A
- US 4952328 A
- US 4605808 A
- US 5674955 A
- WO 0119873 A

### Non-patent literature cited in the description

- **TESSIER M. ; MARECHAL E.** Polym. Chem. *J. Polym. Sci.,* 1998, vol. 26, 785-810
- **TESSIER M. ; MARECHAL E.** Polym. Chem. *J. Polym. Sci.,* 1988, vol. 26, 785-810